# EUROPEAN PATENT APPLICATION

(11) **EP 2 749 870 A1**
(43) Date of publication of application: **02.07.2014**
(21) Application number: 12834812.5
(22) Date of filing: 28.09.2012
(51) Int. Cl.: G01N 21/90, F17C 13/02, B65D 90/48

(54) **METHOD FOR DETERMINING THE LACK OF CONTINUITY IN THE INTERSTITIAL SPACE OF DOUBLE-WALLED RESERVOIRS**

(30) Priority: 28.09.2011 ES 201131566
(71) Applicant: Construcciones Biovivienda, S.l., 46260 ALBERIC (Valencia) (ES)
(72) Inventor: MARTÍNEZ NAVARRETE, Antonio, E-46260 ALBERIC (Valencia) (ES); MARTÍNEZ NAVARRETE, Maximino, E-46260 ALBERIC (Valencia) (ES); MARTÍNEZ NAVARRETE, Rafael, E-46260 ALBERIC (Valencia) (ES)
(74) Representative: Ungria López, Javier
(86) International application number: PCT/ES2012/070676
(87) International publication number: WO 2013/045740

(57) **Abstract**

Such reservoirs comprise, in principle, an outer wall (1), an inner wall (2) defined by a translucent layer of material, and an intermediate layer (3) formed by a three-dimensional fabric (4) combined with an interstitial space (5). The invention is characterised in that a light source (7) is applied to the layer of translucent material (2), crossing the same until it reaches the intermediate layer (3), in such a way that the projection of the emitted light bounces back off an inner face (11) of the outer wall (1) which is in contact with the intermediate layer (3), generating a reflection (6) of the light that creates an aura (8) on the outside, that defines a visible contour line in the projection thereof when the presence of a solid accumulation of material (6) is detected inside the interstitial space (5) of said intermediate layer (3).

## Description

### OBJECT OF THE INVENTION

The present invention, as expressed in the title of this specification, is referred to a method for determining the lack of continuity in the interstitial space of double-walled reservoirs, usually used to store hydrocarbons and chemical products, not ruling out the possibility of holding other products.

In principle, these double-walled reservoirs comprise an outer wall and an inner wall, both joined together by means of a three-dimensional material and/or fabric that generates an interstitial space, ensuring that said outer and inner walls are separated, in such a way that the method, object of the present invention, is precisely designed to detect possible obstructions caused by anomalous material in said interstitial space because of the accumulation of solid material in such interstitial space.

Said obstructions usually are created in the coating process itself, where the three-dimensional fabric is covered with a layer of resin constitutive of the inner wall, the layer of resin is able to create by filtration, especially on horizontal walls, solid areas in said interstitial space which break the interstitial continuity.

The method object of the present invention simplify the checking the quality of the double-walled coating of the reservoir, in order to specifically detect these solid accumulations of material, thus bringing the detection level close to one hundred percent, at a low cost relative to the end product.

### BACKGROUND OF THE INVENTION

Detecting anomalous accumulations of material in interstitial spaces of double-walled reservoirs is very complicated, given that traditionally, said interstitial spaces usually are flooded with a fluid at a temperature very different from room temperature, in such a way that, by means of a thermographic process, it is possible to more or less detect the areas in which the temperature is different, thus identifying interruptions caused by the anomalous accumulation of material in these interstitial spaces of the double-walled reservoirs.

Patent of invention number 2116899 consists of a method for detecting leaks in reservoirs, characterised in that it is comprised of a step in which the vibrations inside the reservoir are measured and registered over a certain period of time and a second step in which the vibration information recorded is processed, in such a way that the information obtained following said processing relates to frequency, whilst the vibrations are registered according to time.

Patent of invention number 2087822 is also known about and it is referred to a method for the coating of metal reservoirs, consisting of preparing the surface with resins, adding a hollow three-dimensional laminated coating and finishing the surface of the same using sheets also adhered by means of resins, thus blocking an intermediate cavity, which enables the pressure thereof to be controlled.

### DESCRIPTION OF THE INVENTION

For the purpose of achieving the aims and avoiding the limitations set out above, the present invention proposes a method for determining the lack of continuity in the interstitial space of double-walled reservoirs, these reservoirs in principle comprising an outer wall, an inner wall made up by a layer of translucent material, for example a resin material and an intermediate layer formed by a three-dimensional fabric, combined with an interstitial space, this intermediate layer being joined to the two walls mentioned above.

Based on this premise, the method is characterised in that a light source is applied to the layer of translucent material, crossing the same until reaching the intermediate layer, in such a way that the projection of the light emitted bounces off an inner face of the outer wall, which is in contact with the intermediate layer, the bouncing off generates a reflection of light that creates an aura outside which defines a visible contour line in the projection thereof when it detects the presence of a solid accumulation of material inside the interstitial space of said intermediate layer.

The incident of the flow of light emitted by the light source is perpendicular to the checking surface corresponding to the plan formed by the double wall of the corresponding reservoir.

Another feature of the invention is that the light source is applied to the free surface of the layer of translucent material, coming into direct contact with the same.

It must be noted that the solid accumulation of material, accumulates more easily in reservoirs with horizontal walls than in reservoirs with vertical walls, because of the fact that in the latter case, gravity makes difficult the anomalously accumulation of material inside the interstitial spaces.

It must also be noted that the intensity of light, of the light source is adapted to the level of transmittance of the translucent layer, since the lower the transmittance the greater the intensity of light in order to achieve an adequate aura.

Hereinafter, in order to provide a better understanding of the present specification, a set of drawings is attached which form an integral part thereof and serves as a non-limiting embodiment of the same.

### BRIEF DESCRIPTION OF THE DRAWINGS

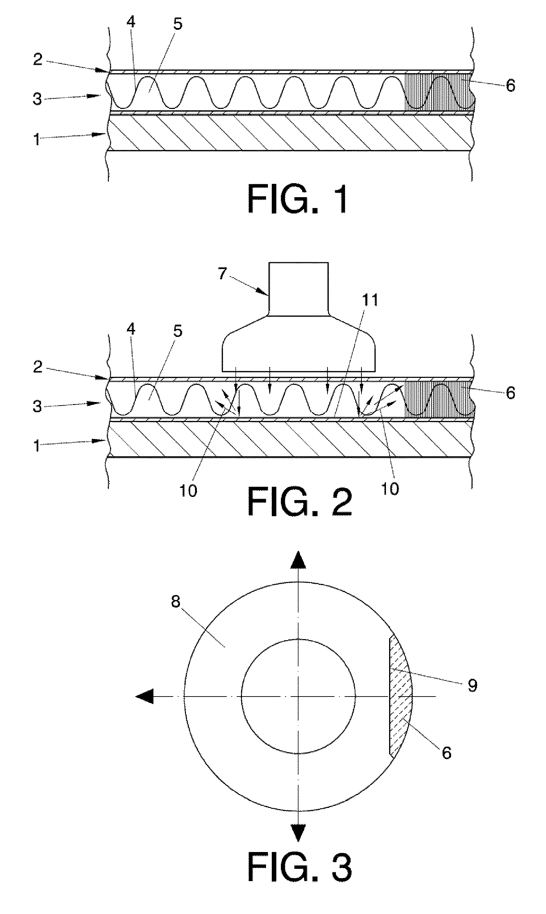

**Figure 1****. -** Shows a section view of a double-walled reservoir, to which the method for determining the lack of continuity in the interstitial space separating both the outer and inner walls of the reservoir, is applied, this method being the object of the invention.
**Figure 2****. -** Shows another section view of the reservoir, wherein the application of the method object of the invention by means of a light source projected on the double wall of the reservoir, in such a way that when there is no continuity in the interstitial space, as is the case in the present figure, an anomaly that may be detected in view of the reflection of light projected on the reservoir is generated, is remarked.
**Figure 3****. -** is a plan view of the reflection of light projected on the reservoir shown in the previous figure, wherein the anomaly detected as a result of a solid anomaly area interrupting the continuity of said interstitial space, is remarked.

### DESCRIPTION OF AN EMBODIMENT OF THE INVENTION

The double-walled reservoir to which the method, object of the invention, is applied, comprises, in principle, an outer wall 1 formed by two layers, an inner wall 2 formed by at least one layer of translucent material, such as resin and an intermediate layer 3 defined by a three-dimensional fabric 4 wherein an interstitial space 5 is generated.

Sometimes solid material accumulations 6 are generated in the intermediate layer owing to potential filtration and other causes, these solid material accumulations 6 taking up part of the interstitial space 5, the continuity of said interstitial space 5 thereby being interrupted.

Based on this premise, the method object of the invention aims to verify and check the potential existence of said solid material accumulations 6.

The method consists of applying a light source 7 to the layer of translucent material 2 deposited on the three-dimensional fabric 4 of the intermediate layer 3, in such a way that the light source 7 is intense enough to cross the layer of translucent material 2, in such a way that owing to the reflection of light 10 inside the intermediate layer 3 as a result of the projection of light bouncing off the inner face 11 of the outer wall 1 of the reservoir, an aura 8 is created outside, which defines a visible contour line 9 in the projection thereof, upon detecting the presence of a solid material accumulation 6 inside the interstitial space 5 that forms part of the intermediate layer 3.

The incidence of the flow of light emitted by the light source 7 is perpendicular to the checking surface corresponding to the plane of the double wall of the reservoir.

In order to prevent light intensity from being lost, the light source 7 comes into direct contact with the free surface of the layer of translucent material 2.

Tests have been carried out using translucent resin, applying a light source to it that is perpendicular to the same, using intensities of light that are not necessarily high at around 200 lumens.

The intensity of light of the light source is adapted to the level of transmittance in the translucent layer 2, which is why the lesser the transmittance the greater the intensity of light to achieve an adequate aura 8.

Tests have been carried out using a light source 7 of 30 lumens, with good results for translucent layers 2 with good transmittance.

In cases where transmittance is low, values of up to 1000 lumens or more may be reached.

## Claims

1. **Method for determining the lack of continuity in the interstitial space of double-walled reservoirs,** these reservoirs comprising:
- an outer wall (1),
- an inner wall (2) determined by a layer of translucent material,
- an intermediate layer (3) formed by a three-dimensional fabric (4) and an interstitial space (5), this intermediate layer (3) being joined to the two walls mentioned (1-2),
**characterized in that**:
a light source (7) is applied to the layer of translucent material (2), crossing the same until it reaches the intermediate layer (3), in such a way that the projection of light emitted bounces off an inner face (11) of the outer wall (1), in contact with the intermediate layer (3), this act of bouncing off generating a reflection (6) of light, which creates an aura (8) outside, which defines a visible contour line (9) in the projection thereof, when it detects the presence of a solid accumulation of material (6) inside the interstitial space (5) pertaining to the intermediate layer (3).

2. **Method for determining the lack of continuity in the interstitial space of double-walled reservoirs** according to claim 1, **characterized in that** the incident of the flow of the light emitted by the light source (7) is perpendicular to the checking surface corresponding to the plane formed by the double wall of the reservoir.

3. **Method for determining the lack of continuity in the interstitial space of double-walled reservoirs** according to any of the claims 1 or 2, **characterized in that** the light source (7) is applied to the free surface of the layer of translucent material (2), being in direct contact with the same.

4. **Method for determining the lack of continuity in the interstitial space of double-walled reservoirs** according to any of the previous claims, **characterized in that** the layer of translucent material (2) comprises a resin material.
